# EUROPEAN PATENT SPECIFICATION

(11) **EP 2 849 470 B1**
(45) Date of publication and mention of the grant of the patent: **27.02.2019**
(21) Application number: 12876412.3
(22) Date of filing: 13.07.2012
(51) Int. Cl.: H04L 29/08, H04W 4/00, H04W 12/06, H04W 48/16, H04W 84/12

(54) **FUNCTION SHARING IN WIRELESS ACCESS HOTSPOT DEVICE**
FUNKTIONSTEILUNG IN EINER HOTSPOT-VORRICHTUNG MIT DRAHTLOSEM ZUGANG
PARTAGE DE FONCTION DANS UN DISPOSITIF HOTSPOT D'ACCÈS SANS FIL

(30) Priority: 11.05.2012 CN 201210146366
(43) Date of publication of application: 18.03.2015
(73) Proprietor: ZTE Corporation, Shenzhen, Guangdong 518057 (CN)
(72) Inventor: YANG, Jie, Shenzhen Guangdong 518057 (CN)
(74) Representative: Novagraaf Technologies
(86) International application number: PCT/CN2012/078631
(87) International publication number: WO 2013/166776

(56) References cited:
- EP-A1- 1 370 050
- EP-A1- 2 337 312
- CN-A- 1 635 811
- CN-A- 101 044 714
- CN-A- 101 617 518
- CN-A- 102 255 902
- US-A1- 2003 236 982

## Description

### TECHNICAL FIELD

The invention relates to the field of communication device including, e.g., a method, device, and system for implementing function sharing in a wireless access hotspot device.

### BACKGROUND

With the popularization of wireless access hotspot products, functions of the devices become increasingly rich. From only being able to provide the conversion from the wireless fidelity (Wi-Fi) access to the cellular access to complete configuration and management of network access, they have developed today to be able to support a variety of personalized applications, such as short message, multimedia message and the Global Position System (GPS) etc.

At present, a wireless access hotspot device supports a plurality of terminals to simultaneously access a wireless network, but if a terminal (a PC or other mobile terminals) needs to use applications on the wireless access hotspot device, it is necessary to be connected via a physical cable or wireless access hotspot device to be able to use the above various applications and services provided by the wireless access hotspot device. A problem brought is that because of the limitation of physical connection manner, only one terminal can be connected to the wireless access hotspot device during a period of time, which thus result in that only one terminal is able to use the applications and services on the wireless access hotspot device during some period of time. It is not convenient for the use of other users who want to use the applications and services on the wireless access hotspot device at the same time, causing wasting of the resources information on the wireless access hotspot device.

The document CN 102255902 A discloses a network equipment function sharing method, which comprises: a virtual equipment transmits an activation request to a network equipment, the network equipment determines that the virtual equipment is legal and allows the activation of the virtual equipment, the virtual equipment activates an own driver and transmits function data according to a network protocol.

The document EP 1 370 050 A1 discloses automatic determination of access point contents of available services for short-range wireless terminals. An apparatus in a short range wireless communication stores a list of keywords and a type list of information indicative of content and services available at an Access Point. A user terminal creates and stores a similar list of keyword and types. The user requests the keyword and types from the Access Point. This list is transmitted to the user within the service discovery protocol during connection set-up. The user Keyword list and Types are matched to the Access point Keywords and Types list to determine if a session should be established or terminated. The Access point may also connect to the terminal to obtain a list of the terminals Keywords and Types to determine if content is available to push to the terminal.

### SUMMARY

The present invention provides for methods for implementing function sharing in a wireless access hotspot as defined in independent claims 1 and 4, a wireless access hotspot device as defined in independent claim 8, a terminal as defined in independent claim 11 and a system as defined in independent claim 14.

Further advantageous aspects of the invention are set out in the dependent claims.

The embodiments and/or examples of the following description which are not covered by the appended claims are considered as not being part of the present invention.

Embodiments of the invention provide a method, device, and system for implementing function sharing in a wireless access hotspot device to achieve that a plurality of users simultaneously use applications supported by the wireless access hotspot device, to make full use of the resources on the wireless access hotspot device.

According to an aspect of the invention, a method for implementing function sharing in a wireless access hotspot device is provided, comprising: the wireless access hotspot device sending information of a function supported by the wireless access hotspot device itself, to a terminal that passed wireless access authentication; the wireless access hotspot device receiving a function sharing request message returned by the terminal, and obtaining, from the function sharing request message information of a function that the terminal requests to share, wherein the information of the function that is requested to be shared comprises all kinds of functions that are successfully matched from the information of the function supported by the wireless access hotspot device and are capable of being shared by the terminal; and when the terminal enabling a function in the information of the function that is requested to be shared, the wireless access hotspot device sending application data corresponding to the enabled function to the terminal in a wireless transmission manner.

According to an embodiments of the invention, the wireless access hotspot device authenticates the terminal for access, comprises: when receiving an access request message sent by the terminal, the wireless access hotspot device sends a message to the terminal to request the terminal to provide an identity identification and an authentication algorithm supported by the terminal; and the wireless access hotspot device authenticating the terminal for access according to the returned identity identification and the authentication algorithm supported by the terminal.

According to an embodiments of the invention, after the wireless access hotspot device obtains from the function sharing request message the information of the function that the terminal requests to share, the method further comprising: the wireless access hotspot device saving the identity identification of the terminal and the received information of the function in the function sharing request message that the terminal requests to share correspondingly.

According to another aspect of the embodiments of the invention, a method for implementing function sharing in a wireless access hotspot device is provided. The method comprising: a terminal that passed wireless access authentication receiving from the wireless access hotspot device information of a function supported by the wireless access hotspot device itself; the terminal matching the information of a function supported by the terminal itself with the information of the function supported by the wireless access hotspot device to match out all kinds of functions capable of being shared by the terminal, and sending a function sharing request message to the wireless access hotspot device, wherein all kinds of the matched-out functions are carried in the function sharing request message, as the information of the function that is requested to be shared; and when the terminal enabling the function in the information of the function that is requested to be shared, the terminal receiving application data corresponding to the function returned by the wireless access hotspot device in a wireless transmission manner.

According to an embodiments of the invention, the terminal is required to be authenticated for access, comprising: sending an access request message to the wireless access hotspot device; sending an identity identification of the terminal and an authentication algorithm supported by the terminal to the wireless access hotspot device according to a request message for providing the identity identification and the supported authentication algorithm that is returned by the wireless access hotspot device; and receiving an authentication result returned by the wireless access hotspot device.

According to an embodiments of the invention, the method further comprising: after all kinds of functions capable of being shared by the terminal are matched out, the terminal loading drives of the matched-out functions; and after receiving the application data sent by the wireless access hotspot device, the terminal completing obtaining and interpretation of the application data using an installed drive.

According to an embodiments of the invention, the wireless transmission manner is a wireless fidelity (Wi-Fi) manner.

According to yet another aspect of the embodiments of the invention, a wireless access hotspot device is provided, comprising: a sending component, configured to send information of a function supported by the wireless access hotspot device to a terminal that passed wireless access authentication; and when the terminal enabling a function in information of a function that is requested to be shared, send application data corresponding to the function to the terminal in a wireless transmission manner; a receiving component, configured to receive a function sharing request message returned by the terminal; and an obtaining component, configured to obtain the information of the function that the terminal requests to share from the function sharing request message.

According to an embodiments of the invention, the wireless access hotspot device further comprising: an authentication component, configured to when receiving an access request message sent by the terminal, send a message to the terminal requesting access to request the terminal to provide an identity identification and an authentication algorithm supported by the terminal; and to authenticate the terminal for access according to the returned identity identification and the authentication algorithm supported by the terminal.

According to an embodiments of the invention, the wireless access hotspot device further comprising: a memory component, configured to after obtaining the information of the function that the terminal requests to share from the function sharing request message, save the identity identification of the terminal and the received information of the function in the function sharing request message that the terminal requests correspondingly.

According to still another aspect of the embodiments of the invention, a terminal is provided, comprising: a receiving component, configured to after passed the wireless access authentication, receive from a wireless access hotspot device information of a function supported by the wireless access hotspot device itself; and when the terminal enables the function in the information of the function that is requested to be shared, to receive application data of the function returned by the wireless access hotspot device in a wireless transmission manner; a matching component, configured to match information of a function supported by the terminal with said information of a function supported by the wireless access hotspot device, and to match out all kinds of functions capable of being shared by the terminal; a sending component, configured to send a function sharing request message to the wireless access hotspot device, wherein all kinds of the matched-out functions capable of being shared by the terminal are carried in the function sharing request message, as the information of the function that is requested to be shared.

According to an embodiments of the invention, the terminal further comprising: an authentication component, configured to send an access request message to the wireless access hotspot device; return an identity identification of the terminal and an authentication algorithm supported by the terminal to the wireless access hotspot device according to a request message for providing the identity identification and the supported authentication algorithm that is sent by the wireless access hotspot device; and receive an authentication result returned by the wireless access hotspot device.

According to an embodiments of the invention, the terminal further comprising: a drive loading component, configured to load drive of the functions matched out by the matching component; an application data processing component, configured to after the terminal receives application data sent by the wireless access hotspot device, complete obtaining and interpretation of the application data using a drive installed by the above drive loading component.

According to still another aspect of the embodiments of the invention, a system for implementing function sharing in a wireless access hotspot device is provided, comprising: the wireless access hotspot device and at least one terminal; wherein the wireless access hotspot device is configured to send information of a function supported by the wireless access hotspot device itself to a terminal that passed wireless access authentication; to receive a function sharing request message returned by the terminal, and to obtain from the function sharing request message information of a function the terminal requests to share; the information of the function that is requested to be shared comprising all kinds of functions that are successfully matched from the information of the function supported by the wireless access hotspot device and are capable of being shared by the terminal; and when the terminal enabling a function in the information of the function that is requested to be shared, to send application data corresponding to the function to the terminal in a wireless transmission manner; each terminal is configured to after passed the wireless access authentication, receive from the wireless access hotspot device the information of the function supported by the wireless access hotspot device itself; to match the information of the function supported by the terminal with the information of the function supported by the wireless access hotspot device, and to match out all kinds of functions capable of being shared by the terminal, and to send the function sharing request message to the wireless access hotspot device, wherein the matched-out all kinds of functions are carried in the function sharing request message, as the information of the function that is requested to be shared; and when enabling the function in the information of the function that is requested to be shared, to receive application data of the function returned by the wireless access hotspot device in a wireless transmission manner.

The beneficial effects of the embodiments of the present invention, comprising:
The embodiments of the invention provide a method, device, and system for implementing function sharing in a wireless access hotspot device. The wireless access hotspot device can send information of a function supported by itself for a terminal that passed wireless authentication, the terminal matches information of a function supported by itself with the information of the function supported by the wireless access hotspot device to get a function that is requested to share and inform the wireless access hotspot device. The wireless access hotspot device sends corresponding application data when the terminal enables some function that is requested to share. The embodiments of the invention use the function of the wireless access hotspot device that can communicate with a plurality of terminals simultaneously to achieve providing corresponding services for the plurality of terminals and function sharing, thus facilitating use for users and making full use of the resources information on a wireless access hotspot device, and solving the problem in the related art that only one user can use application and services on a wireless access hotspot device during some period of time due to that a terminal must be connected the wireless access hotspot in a physical manner.

### BRIEF DESCRIPTION OF THE DRAWINGS

Figure 1 is flowchart of a method for implementing function sharing in a wireless access hotspot device provided by an embodiment of the invention in the wireless access hotspot device;
Figure 2 is flowchart of the method for implementing function sharing in a wireless access hotspot device provided by an embodiment of the invention on a terminal side;
Figure 3 is flowchart of the method for implementing function sharing in a wireless access hotspot device provided by an embodiment of the invention, taking the application GPS as example;
Fig. 4 is a component structure diagram of a wireless access hotspot device provided by an embodiment of the invention;
Fig. 5 is a component structure diagram of a terminal provided by an embodiment of the present invention;
Figure 6 is structure diagram of a system for implementing function sharing in a wireless access hotspot device provided by an embodiment of the invention.

### DESCRIPTION OF EMBODIMENTS

The particular embodiments of the method, device and system for implementing function sharing in a wireless access hotspot device provided by the embodiments of the invention will be described below in combination with the accompanying drawings in the description.

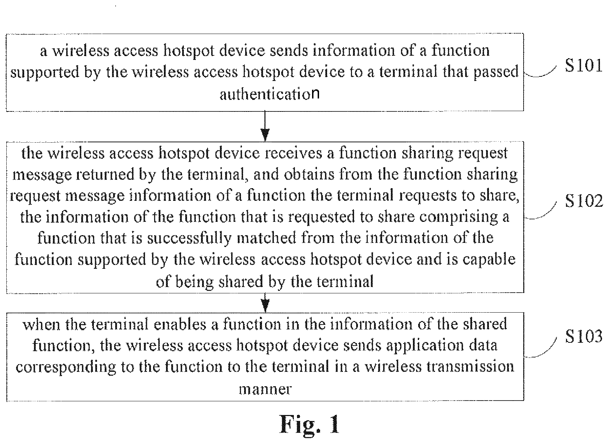

A method for implementing function sharing in a wireless access hotspot device provided by the embodiments of the invention, as shown in Figure 1, on the wireless access hotspot device side, the method specifically comprises the following steps:
Step S101, the wireless access hotspot device sends information of a function supported by the wireless access hotspot device itself to a terminal that passed wireless access authentication;
Step S102, the wireless access hotspot device receives a function sharing request message returned by the terminal, and obtains from the function sharing request message information of a function that the terminal requests to share, the information of the function that is requested to share comprising all kinds of functions that are matched from the information of the function supported by the wireless access hotspot device and are capable of being shared by the terminal; and
Step S103, when the terminal enables a function in the above information of the shared function, the wireless access hotspot device sends application data corresponding to the function to the terminal in a wireless transmission manner.

Further, the wireless access hotspot device is required to authenticate the identity of the terminal, specifically comprises the following steps:
when receiving an access request message sent by the terminal, the wireless access hotspot device sends a message to the terminal requesting access to request the terminal to provide an identity identification and an authentication algorithm supported by the terminal;
the wireless access hotspot device authenticates the terminal for access according to the returned identity identification and the authentication algorithm supported by the terminal.

Further, after the wireless access hotspot device obtains from the function sharing request message the information of the function that the terminal requests to share, the method further comprises: the wireless access hotspot device correspondingly saves the identity identification of the terminal and the received information of the function in the function sharing request message sent by the terminal that the terminal requests to share.

In particular, the wireless access hotspot device can correspondingly store the identity identification of the terminal and the information of the function that the terminal requests to share in a database for convenient maintenance.

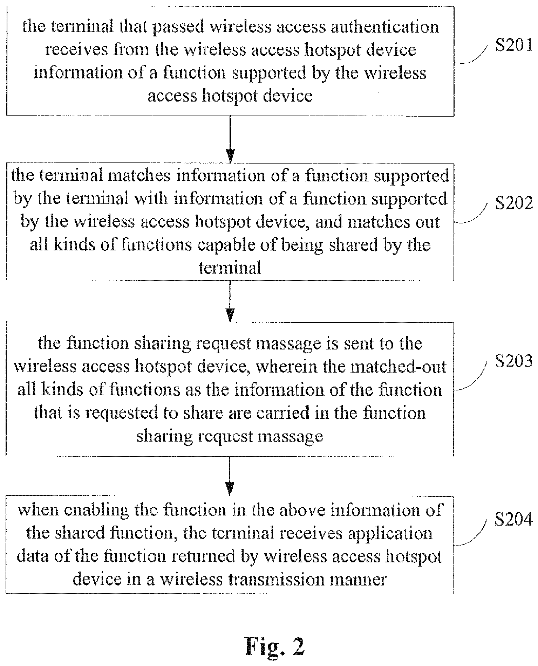

The method for implementing function sharing in a wireless access hotspot device provided by the embodiments of the invention, as shown in Figure 2, on the terminal side, the method specifically comprises the following steps:
Step S201, the terminal that passed wireless access authentication receives from the wireless access hotspot device information of a function supported by the wireless access hotspot device itself;
Step S202, the terminal matches information of a function supported by the terminal with information of a function supported by the wireless access hotspot device, and matches out all kinds of functions capable of being shared by the terminal;
Step S203, the terminal sends a function sharing request message to the wireless access hotspot device, wherein the matched-out kinds of functions as the information of the function that is requested to share are carried in the function sharing request message;
Step S204, when enabling the function in the above information of the shared function, the terminal receives application data of the function returned by wireless access hotspot device in a wireless transmission manner.

Further, the wireless access hotspot device is required to authenticate the identity of the terminal, specifically comprises the following steps:
the terminal sends an access request message to the wireless access hotspot device;
the terminal returns the identity identification of the terminal and the authentication algorithm supported by the terminal to the wireless access hotspot device according to a request message for providing the identity identification and the supported authentication algorithm sent by the wireless access hotspot device;
the terminal receives an authentication result returned by the wireless access hotspot device.

Further, the above method for implementing function sharing in a wireless access hotspot device provided by the embodiments of the invention further comprises performing the following steps: after the functions capable of being shared by the terminal are matched out, the terminal loadsthe drive of the above matched-out all kinds of functions; and after receiving the application data sent by the wireless access hotspot device, the terminal completes obtaining and interpretation of the application data using the above installed drive.

In order to better describe the above method for implementing function sharing in a wireless access hotspot device provided by the embodiments of the invention, description is made with a particular embodiment below. It should be noted that since the related network protocols used in the package delivery, unpacking, and packaging involved herein fall within the standard protocols in related art, they are not described redundantly.

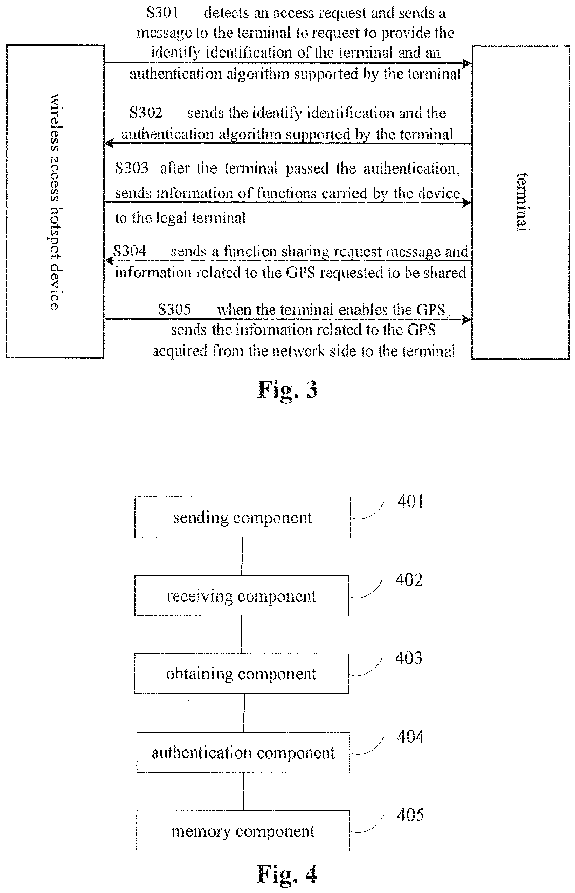

As shown in Figure 3, taking GPS functions as example, the technical solutions of the embodiments of the invention are further described:
Step S301, the wireless access hotspot device detects whether there is a terminal to request access, and after finding a request message, sends a message to the terminal generating the access request to request to provide an identity identification and an authentication algorithm supported by the terminal;
Step S302, the terminal requesting access sends its identity identification and supported authentication algorithm to the wireless access hotspot device in a package;
Step S303, after receiving the information of the identity identification of the terminal, the wireless access hotspot authenticates the terminal for legality, and if the terminal passed the authentication, the terminal is allowed to access, and sends package the functions carried by the device, and sends the package to the legal terminal; and if the terminal cannot pass the authentication, the communication is terminated;
Step S304, after receiving a message permitting access, the terminal matches the information of the function received in step S303 with the GPS function supported by the terminal, after successful matching, loads a preset GPS drive; and then the terminal sends a function sharing request message to the wireless access hotspot device to request information related to shared GPS;
Step S305, after receiving the information of a GPS function requested to be shared, the wireless access hotspot device stores the identification of the terminal and the information of the GPS function requested to be shared correspondingly (for example, storing in a database maintained by the wireless access hotspot device itself); and when the terminal enables the GPS, the wireless access hotspot device sends the information related to the GPS acquired by the wireless access hotspot device from the network side to the terminal according to the stored information of the identify identification;

After receiving the information (such as longitude and latitude, name of current place etc.) related to the GPS acquired from the network side that is sent by the wireless access hotspot device, the terminal can acquire and interpret the relevant information provided by the wireless access hotspot device using the information provided by the drive mounted in the step S304.

Preferably, an encryption/decryption function can be added on the wireless access hotspot device side and the network side respectively in the embodiments of the present invention, namely after the terminal passed the authentication performed by the wireless access hotspot device, all the subsequent information is encrypted/decrypted by their respective encryption/decryption component respectively. Since encryption technology is related art technology, it is not described redundantly herein.

Based on the same inventive concept, the embodiments of the present invention also provide a wireless access hotspot device, a terminal and a system for implementing function sharing in the wireless access hotspot device. Because the principles of these devices solving problems are similar to those of the method for implementing function sharing in the previous wireless access hotspot device, the previous method can be referred to for the implementation of the device and system, and the overlapping is not described redundantly.

A wireless access hotspot device provided by the embodiments of the invention, as shown in Figure 4, comprises:
a sending component 401, is configured to send information of a function supported by the wireless access hotspot device itself to a terminal that passed wireless access authentication; and when the terminal enabling a function in the information of a function that is requested to share, send application data corresponding to the function to the terminal in a wireless transmission manner; a receiving component 402, connected to the above sending component 401, is configured to receive a function sharing request message returned by the terminal; and an obtaining component 403, connected to the above receiving component 402 , is configured to obtain the information of the function that the terminal requests to share from the function sharing request message.

Further, as shown in Figure 4, the above wireless access hotspot device of the embodiments of the invention may further comprises: an authentication component 404, connected to the above obtaining component 403, is configured to when receiving an access request message sent by the terminal, send a message to the terminal requesting access to request the terminal to provide an identity identification and an authentication algorithm supported by the terminal; and authenticate the terminal for access according to the returned identity identification and the authentication algorithm supported by the terminal.

Further, as shown in Fig.4, the above wireless access hotspot device of the embodiments of the present invention can also comprises a memory component 405, in particular: a memory component 405, connected to the above authentication component 404, is configured to save the identity identification of the terminal and the received information of the function in the function sharing request message that the terminal requests correspondingly after obtaining the information of the function that the terminal requests to share from the function sharing request message received by the terminal.

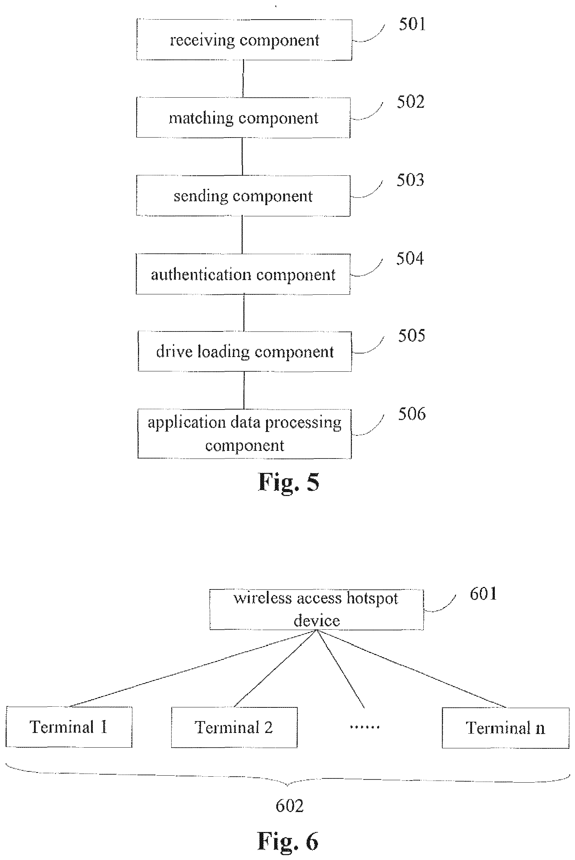

A terminal provided by the embodiments of the present invention, as shown in Figure 5, comprises:
a receiving component 501, is configured to receive from a wireless access hotspot device information of a function supported by the wireless access hotspot device itself; and when the terminal enables a function in the information of the function that the terminal requests to share, receive application data of the function returned by the wireless access hotspot device in a wireless transmission manner; a matching component 502, connected to the above receiving component 501, is configured to match information of a function supported by the terminal with information of a function supported by the wireless access hotspot device, and match out all kinds of functions capable of being shared by the terminal; a sending component 503, connected to the above matching component 502, is configured to send the function sharing request message to the wireless access hotspot device, wherein the matched-out all kinds of functions capable of being shared by the terminal as the information of the function that is requested to share are carried in the function sharing request message.

Further, as shown in Figure 5, the above terminal provided by the embodiments of the invention may further comprises: an authentication component 504, connected to the above sending component 503, is configured to send an access request message to the wireless access hotspot device; return an identity identification of the terminal and an authentication algorithm supported by the terminal to the wireless access hotspot device according to a request message for providing the identity identification and the supported authentication algorithm that is sent by the wireless access hotspot device; and receive an authentication result returned by the wireless access hotspot device.

Further, as shown in Figure 5, the terminal provided by the embodiments of the invention may further comprises: a drive loading component 505, connected to the above authentication component 504, is configured to load drive of the functions matched out by the matching component; an application data processing component 506, connected to the above drive loading component 505, is configured to, after the terminal receives application data sent by the wireless access hotspot device, complete obtaining and interpretation of the application data using a drive installed by the above drive loading component.

Further, the embodiments of the present invention can also add an encryption/decryption component to the wireless access hotspot device side and the network side respectively, namely after the terminal passes the authentication performed by the wireless access hotspot device, all the subsequent information is encrypted/decrypted by their respective encryption/decryption component respectively. Since encryption technology is related art technology, it is not described redundantly herein.

A system for implementing function sharing in a wireless access hotspot device is provided by the embodiments of the invention, as shown in Figure 6, comprises: a wireless access hotspot device side and at least one terminal, specifically comprises:
the wireless access hotspot device 601, is configured to send information of a function supported by the wireless access hotspot device to a terminal that passed wireless access authentication; receive a function sharing request message returned by the terminal, and obtain from the above function sharing request message information of a function the terminal requests to share; the information of the function that is requested to share comprising all kinds of functions that are successfully matched from the information of the function supported by the wireless access hotspot device and are capable of being shared by the terminal; and when the terminal enables a function in the above information of the shared function, send application data corresponding to the function to the terminal in a wireless transmission manner;
each terminal 602, connected to the above wireless access hotspot device 601, is configured to after passed the wireless access authentication, receive from the wireless access hotspot device the information of the function supported by the wireless access hotspot device itself; match the information of the function supported by the terminal with the information of the function supported by the wireless access hotspot device, and send the function sharing request message to the wireless access hotspot device, wherein the successfully matched-out all kinds of functions as the information of the function that is requested to share are carried in the function sharing request message; and when enabling a function in the information of the shared function, receive application data of the function returned by the wireless access hotspot device in a wireless transmission manner.

The embodiments of the invention provide a method, device, and system for implementing function sharing in a wireless access hotspot device. The wireless access hotspot device can send information of a function supported by itself for a terminal that passed wireless authentication, the terminal matches information of a function supported by itself with the information of the function supported by the wireless access hotspot device to get a function that is requested to share and inform the wireless access hotspot device. The wireless access hotspot device sends corresponding application data when the terminal enables some function that is requested to share. The embodiments of the invention use the function of the wireless access hotspot device that can communicate with a plurality of terminals simultaneously to achieve providing corresponding services for the plurality of terminals and function sharing, thus facilitating use for users and making full use of the resources information on a wireless access hotspot device, and solving the problem in the related art that only one user can use application and services on a wireless access hotspot device during some period of time due to that a terminal must be connected the wireless access hotspot in a physical manner.

From the description of the above embodiments, those skilled in the art may clearly understand that the embodiments of the present invention can be implemented by hardware, or also by software plus a necessary general purpose hardware platform. Based upon such understanding, the technical solutions of embodiments of the invention can be embodied in the form of a software product, which can be stored in a storage medium (CD-ROM, flash memory, mobile HD, etc.) including several instructions to cause a computer device (which may be a private computer, a server, or a network device, etc.) to perform the methods according to the various embodiments of the invention. The invention can have various modifications and changes, and can be implemented terminals of various forms, and is also not to limited to an embedded system.

It should be understood by persons skilled in the art that the accompanying drawings are merely schematic diagrams of one exemplary embodiment, and components or procedures in the accompanying drawings are not necessarily required in implementing the present invention. Persons skilled in the art may understand that the components in the devices provided in the embodiments may be arranged in the devices in a distributed manner according to the description of the embodiments, or may be arranged in one or multiple devices which are different from those described in the embodiments. The components in the foregoing embodiments may be combined into one component, and may also be split into multiple sub-components.

The sequence numbers of the preceding embodiments of the present invention are merely for description purpose but do not indicate the preference of the embodiments.

## Claims

1. A method for implementing function sharing in a wireless access hotspot device, comprising:
the wireless access hotspot device sending information of a function supported by the wireless access hotspot device itself, to a terminal that passed wireless access authentication (S101);
the wireless access hotspot device obtaining, from a function sharing request message returned by the terminal, an information of a function that the terminal requests to share, wherein the information of the function that is requested to be shared comprises all kinds of functions that are successfully matched from the information of the function supported by the wireless access hotspot device and are capable of being shared by the terminal (S102); and
when the terminal enabling a function in the information of the function that is requested to be shared, the wireless access hotspot device sending application data corresponding to the enabled function to the terminal in a wireless transmission manner (S103).

2. The method according to claim 1, wherein the wireless access hotspot device authenticates the terminal for access, specifically comprising:
when receiving an access request message sent by the terminal, the wireless access hotspot device sends a message to the terminal to request the terminal to provide an identity identification and an authentication algorithm supported by the terminal;
the wireless access hotspot device authenticates the terminal for access according to the returned identity identification and the authentication algorithm supported by the terminal.

3. The method according to claim 1 or 2, further comprising:
after the wireless access hotspot device obtains, from the function sharing request message returned by the terminal, information of the function the terminal requests to share,
the wireless access hotspot device saving the identity identification of the terminal and the information of the function in the function sharing request message that the terminal requests to share correspondingly.

4. A method for implementing function sharing in a wireless access hotspot device, comprising:
a terminal that passed wireless access authentication receiving from the wireless access hotspot device information of a function supported by the wireless access hotspot device itself(S201);
the terminal matching the information of the function supported by the terminal itself with the information of the function supported by the wireless access hotspot device to match out all kinds of functions capable of being shared by the terminal (S202), and sending a function sharing request message to the wireless access hotspot device, wherein all kinds of the matched-out functions are carried in the function sharing request message, as the information of the function that is requested to be shared (S203); and
when the terminal enabling the function in the information of the function that is requested to be shared, the terminal receiving application data corresponding to the function returned by wireless access hotspot device in a wireless transmission manner (S204).

5. The method according to claim 4, wherein the terminal is required to be authenticated for access, specifically comprising:
sending an access request message to the wireless access hotspot device;
sending the identity identification of the terminal and the authentication algorithm supported by the terminal to the wireless access hotspot device according to a request message for providing the identity identification and the supported authentication algorithm returned by the wireless access hotspot device;
receiving an authentication result returned by the wireless access hotspot device.

6. The method according to claim 4, further comprising:
after all kinds of functions capable of being shared by the terminal are matched out, the terminal loading drives of the matched-out functions; and after receiving the application data sent by the wireless access hotspot device, the terminal completing obtaining and interpretation of the application data using an installed drive.

7. The method according to any one of claims 4-6, wherein the wireless transmission manner is a wireless fidelity, Wi-Fi, manner.

8. A wireless access hotspot device, comprising:
a sending component (401), configured to send information of a function supported by the wireless access hotspot device to a terminal that passed wireless access authentication; and when the terminal enabling a function in information of a function that is requested to be shared, send application data corresponding to the function to the terminal in a wireless transmission manner;
a receiving component (402), configured to receive a function sharing request message returned by the terminal; and
an obtaining component (403), configured to obtain the information of the function that the terminal requests to share from the function sharing request message.

9. The wireless access hotspot device according to claim 8, further comprising:
an authentication component (404), configured to when receiving an access request message sent by the terminal, send a message to the terminal requesting access to request the terminal to provide an identity identification and an authentication algorithm supported by the terminal; and to authenticate the terminal for access according to the returned identity identification and the authentication algorithm supported by the terminal.

10. The wireless access hotspot device according to claim 8 or 9, further comprising: a memory component (405), configured to after obtaining the information of the function that the terminal requests to share from the function sharing request message, save the identity identification of the terminal and the received information of the function in the function sharing request message that the terminal requests correspondingly.

11. A terminal, comprising:
a receiving component (501), configured to, after passed the wireless access authentication, receive from a wireless access hotspot device information of a function supported by the wireless access hotspot device itself; and when the terminal enables the function in information of the function that is requested to be shared, to receive application data of the function returned by the wireless access hotspot device in a wireless transmission manner;
a matching component (502), configured to match information of a function supported by the terminal with said information of a function supported by the wireless access hotspot device, and to match out all kinds of functions capable of being shared by the terminal;
a sending component (503), configured to send a function sharing request message to the wireless access hotspot device, wherein all kinds of the matched-out functions capable of being shared by the terminal are carried in the function sharing request message, as the information of the function that is requested to be shared.

12. The terminal according to claim 11, further comprising:
an authentication component (504), configured to send an access request message to the wireless access hotspot device; return an identity identification of the terminal and an authentication algorithm supported by the terminal to the wireless access hotspot device according to a request message sent by the wireless access hotspot device for providing the identity identification and the supported authentication algorithm; and receive an authentication result returned by the wireless access hotspot device.

13. The terminal according to claim 11, further comprising:
a drive loading component (505), configured to load drives of the functions matched out by the matching component; and
an application data processing component (506), configured to after the terminal receives application data sent by the wireless access hotspot device, complete obtaining and interpretation of the application data using a drive installed by the above drive loading component.

14. A system for implementing function sharing in a wireless access hotspot device, comprising: the wireless access hotspot device and at least one terminal; wherein:
the wireless access hotspot device is configured to send information of a function supported by the wireless access hotspot device itself to a terminal that passed wireless access authentication; to receive a function sharing request message returned by the terminal, and to obtain from the function sharing request message information of a function the terminal requests to share; the information of the function that is requested to be shared comprising all kinds of functions that are successfully matched from the information of the function supported by the wireless access hotspot device and are capable of being shared by the terminal; and when the terminal enabling a function in the information of the function that is requested to be shared, to send application data corresponding to the function to the terminal in wireless transmission manner;
each terminal is configured to after passed the wireless access authentication, receive from the wireless access hotspot device the information of the function supported by the wireless access hotspot device itself; to match the information of the function supported by the terminal with the information of the function supported by the wireless access hotspot device, and to match out all kinds of functions capable of being shared by the terminal, and to send the function sharing request message to the wireless access hotspot device, wherein the matched-out all kinds of functions are carried in the function sharing request message, as the information of the function that is requested to be shared; and when enabling the function in the information of the function that is requested to be shared, to receive application data of the function returned by the wireless access hotspot device in a wireless transmission manner.

## Patentansprüche

1. Verfahren zur Implementierung von gemeinsamer Funktionsnutzung in einer Drahtloszugriffs-Hotspot-Vorrichtung, umfassend:
Senden, durch die Drahtloszugriffs-Hotspot-Vorrichtung, von Informationen einer Funktion, welche von der Drahtloszugriffs-Hotspot-Vorrichtung selbst unterstützt wird, an ein Endgerät, welches Drahtloszugriffs-Authentifizierung bestanden hat (S101);
Beziehen, durch die Drahtloszugriffs-Hotspot-Vorrichtung aus einer vom Endgerät zurückgegeben gemeinsamen Funktionsnutzungs-Anfragenachricht, einer Information einer Funktion, welche das Endgerät anfragt, gemeinsam zu nutzen, wobei die Information der Funktion, welche angefragt wird, gemeinsam genutzt zu werden, alle Arten von Funktionen umfasst, die erfolgreich aus den Informationen der von der Drahtloszugriffs-Hotspot-Vorrichtung unterstützten Funktion abgeglichen werden und geeignet sind, von dem Endgerät gemeinsam genutzt zu werden (S102); und
wenn das Endgerät eine Funktion in den Informationen der Funktion aktiviert, welche angefragt wird, gemeinsam genutzt zu werden, Senden, durch die Drahtloszugriffs-Hotspot-Vorrichtung, von Anwendungsdaten, die der aktivierten Funktion entsprechen, in einer drahtlosen Übertragungsweise an das Endgerät (S103).

2. Verfahren nach Anspruch 1, wobei die Drahtloszugriffs-Hotspot-Vorrichtung das Endgerät für Zugriff authentifiziert, spezifisch umfassend:
wenn eine vom Endgerät gesendete Zugriffsanfragenachricht empfangen wird, sendet die Drahtloszugriffs-Hotspot-Vorrichtung eine Nachricht an das Endgerät, um das Endgerät dazu aufzufordern, eine Identitätskennung und einen Authentifizierungsalgorithmus bereitzustellen, der vom Endgerät unterstützt wird;
die Drahtloszugriffs-Hotspot-Vorrichtung authentifiziert das Endgerät gemäß der zurückgegebenen Identitätskennung und dem vom Endgerät unterstützen Authentifizierungsalgorithmus für Zugriff.

3. Verfahren nach Anspruch 1 oder 2, weiter umfassend:
nachdem die Drahtloszugriffs-Hotspot-Vorrichtung aus der vom Endgerät zurückgegebenen gemeinsamen Funktionsnutzungs-Anfragenachricht Informationen der Funktion bezieht, welche das Endgerät gemeinsam zu nutzen anfragt, Speichern, durch die Drahtloszugriffs-Hotspot-Vorrichtung, der Identitätskennung des Endgeräts und der Informationen der Funktion in der gemeinsamen Funktionsnutzungs-Anfragenachricht, welche das Endgerät dementsprechend gemeinsam zu nutzen anfragt.

4. Verfahren zum Implementieren von gemeinsamer Funktionsnutzung in einer Drahtloszugriffs-Hotspot-Vorrichtung, umfassend:
Empfangen, durch ein Endgerät, welches Drahtloszugriffs-Authentifizierung bestanden hat, von Informationen aus der Drahtloszugriffs-Hotspot-Vorrichtung einer Funktion, welche von der Drahtloszugriffs-Hotspot-Vorrichtung selbst unterstützt wird (S201);
Abgleichen, durch das Endgerät, der Informationen der vom Endgerät selbst unterstützten Funktion mit den Informationen der von der Drahtloszugriffs-Hotspot-Vorrichtung unterstützten Funktion, um alle Arten von Funktionen herauszugleichen, die geeignet sind, vom Endgerät gemeinsam genutzt zu werden (S202), und Senden einer gemeinsamen Funktionsnutzungs-Anfragenachricht an die Drahtloszugriffs-Hotspot-Vorrichtung, wobei alle Arten der herausgeglichenen Funktionen in der gemeinsamen Funktionsnutzungs-Anfragenachricht als die Informationen der Funktion übermittelt werden, welche angefragt wird, gemeinsam genutzt zu werden (S203); und
wenn das Endgerät die Funktion in den Informationen der Funktion aktiviert, welche angefragt wird, gemeinsam genutzt zu werden, Empfangen, durch das Endgerät, von der Funktion entsprechenden Anwendungsdaten, die von der Drahtloszugriffs-Hotspot-Vorrichtung in einer drahtlosen Übertragungsweise zurückgegeben werden (S204).

5. Verfahren nach Anspruch 4, wobei das Endgerät für Zugriff authentifiziert werden muss, spezifisch umfassend:
Senden einer Zugriffsanfragenachricht an die Drahtloszugriffs-Hotspot-Vorrichtung;
Senden der Identitätskennung des Endgeräts und des vom Endgerät unterstützten Authentifizierungsalgorithmus an die Drahtloszugriffs-Hotspot-Vorrichtung gemäß einer Anfragenachricht zum Bereitstellen der Identitätskennung und des unterstützten Authentifizierungsalgorithmus, die von der Drahtloszugriffs-Hotspot-Vorrichtung zurückgegeben wird;
Empfangen eines Authentifizierungsergebnisses, das von der Drahtloszugriffs-Hotspot-Vorrichtung zurückgegeben wird.

6. Verfahren nach Anspruch 4, weiter umfassend:
nachdem alle Arten von Funktionen, die geeignet sind, vom Endgerät gemeinsam genutzt zu werden, herausgeglichen wurden, Laden, durch das Endgerät, von Laufwerken der herausgeglichenen Funktionen; und nach Empfangen der von der Drahtloszugriffs-Hotspot-Vorrichtung gesendeten Anwendungsdaten, Abschließen, durch das Endgerät, des Beziehens und Interpretierens der Anwendungsdaten unter Verwendung eines installierten Laufwerks.

7. Verfahren nach einem der Ansprüche 4 bis 6, wobei die drahtlose Übertragungsweise eine Wireless Fidelity-, Wi-Fi, Weise ist.

8. Drahtloszugriffs-Hotspot-Vorrichtung, umfassend:
eine Sendekomponente (401), die dazu konfiguriert ist, Informationen einer Funktion, welche von der Drahtloszugriffs-Hotspot-Vorrichtung unterstützt wird, an ein Endgerät zu senden, welches Drahtloszugriffs-Authentifizierung bestanden hat; und wenn das Endgerät eine Funktion in Informationen einer Funktion aktiviert, welche angefragt wird, gemeinsam genutzt zu werden, Anwendungsdaten, die der Funktion entsprechen, in einer drahtlosen Übertragungsweise an das Endgerät zu senden;
eine Empfangskomponente (402), die dazu konfiguriert ist, eine vom Endgerät zurückgegebene gemeinsame Funktionsnutzungs-Anfragenachricht zu empfangen; und
eine Bezugskomponente (403), die dazu konfiguriert ist, die Informationen der Funktion, welche das Endgerät anfragt, gemeinsam zu nutzen, aus der gemeinsamen Funktionsnutzungs-Anfragenachricht zu beziehen.

9. Drahtloszugriffs-Hotspot-Vorrichtung nach Anspruch 8, weiter umfassend:
eine Authentifizierungskomponente (404), die dazu konfiguriert ist, wenn eine vom Endgerät gesendete Zugriffsanfragenachricht empfangen wird, eine Nachricht an das Endgerät, welches Zugriff anfragt, zu senden, um das Endgerät dazu aufzufordern, eine Identitätskennung und einen Authentifizierungsalgorithmus bereitzustellen, der vom Endgerät unterstützt wird; und das Endgerät gemäß der zurückgegebenen Identitätskennung und dem vom Endgerät unterstützten Authentifizierungsalgorithmus für Zugriff zu authentifizieren.

10. Drahtloszugriffs-Hotspot-Vorrichtung nach Anspruch 8 oder 9, weiter umfassend: eine Speicherkomponente (405), die dazu konfiguriert ist, nach Beziehen der Informationen der Funktion, welche das Endgerät anfragt, gemeinsam zu nutzen, aus der gemeinsamen Funktionsnutzungs-Anfragenachricht, die Identitätskennung des Endgeräts und die empfangenen Informationen der Funktion in der gemeinsamen Funktionsnutzungs-Anfragenachricht, welche das Endgerät dementsprechend anfragt, zu speichern.

11. Endgerät, umfassend:
eine Empfangskomponente (501), die dazu konfiguriert ist, nachdem sie die Drahtloszugriffs-Authentifizierung bestanden hat, von einer Drahtloszugriffs-Hotspot-Vorrichtung Informationen einer Funktion zu empfangen, welche von der Drahtloszugriffs-Hotspot-Vorrichtung selbst unterstützt wird; und wenn das Endgerät die Funktion in Informationen der Funktion aktiviert, welche angefragt wird, gemeinsam genutzt zu werden, Anwendungsdaten der Funktion zu empfangen, die von der Drahtloszugriffs-Hotspot-Vorrichtung in einer drahtlosen Übertragungsweise zurückgegeben werden;
eine Abgleichkomponente (502), die dazu konfiguriert ist, Informationen einer Funktion, die vom Endgerät unterstützt wird, mit den Informationen einer Funktion abzugleichen, die von der Drahtloszugriffs-Hotspot-Vorrichtung unterstützt wird, und alle Arten von Funktionen herauszugleichen, die geeignet sind, vom Endgerät gemeinsam genutzt zu werden;
eine Sendekomponente (503), die dazu konfiguriert ist, eine gemeinsame Funktionsnutzungs-Anfragenachricht an die Drahtloszugriffs-Hotspot-Vorrichtung zu senden, wobei alle Arten der herausgeglichenen Funktionen, die geeignet sind, vom Endgerät gemeinsam genutzt zu werden, in der gemeinsamen Funktionsnutzungs-Anfragenachricht als die Information der Funktion übermittelt werden, welche angefragt wird, gemeinsam genutzt zu werden.

12. Endgerät nach Anspruch 11, weiter umfassend:
eine Authentifizierungskomponente (504), die dazu konfiguriert ist, eine Zugriffsanfragenachricht an die Drahtloszugriffs-Hotspot-Vorrichtung zu senden; eine Identitätskennung des Endgeräts und einen vom Endgerät unterstützten Authentifizierungsalgorithmus gemäß einer von der Drahtloszugriffs-Hotspot-Vorrichtung gesendeten Anfragenachricht zum Bereitstellen der Identitätskennung und des unterstützten Authentifizierungsalgorithmus an die Drahtloszugriffs-Hotspot-Vorrichtung zurückzugeben; und ein Authentifizierungsergebnis, das von der Drahtloszugriffs-Hotspot-Vorrichtung zurückgegeben wird, zu empfangen.

13. Endgerät nach Anspruch 11, weiter umfassend:
eine Laufwerks-Ladekomponente (505), die dazu konfiguriert ist, Laufwerke der von der Abgleichkomponente herausgeglichenen Funktionen zu laden; und
eine Anwendungsdaten-Verarbeitungskomponente (506), die dazu konfiguriert ist, nachdem das Endgerät von der Drahtloszugriffs-Hotspot-Vorrichtung gesendete Anwendungsdaten empfängt, das Beziehen und Interpretieren der Anwendungsdaten unter Verwendung eines installierten Laufwerks über die obige Laufwerks-Ladekomponente abzuschließen.

14. System zum Implementieren von gemeinsamer Funktionsnutzung in einer Drahtloszugriffs-Hotspot-Vorrichtung, umfassend: die Drahtloszugriffs-Hotspot-Vorrichtung und mindestens ein Endgerät; wobei:
die Drahtloszugriffs-Hotspot-Vorrichtung dazu konfiguriert ist, Informationen einer Funktion, welche von der Drahtloszugriffs-Hotspot-Vorrichtung selbst unterstützt wird, an ein Endgerät zu senden, welches Drahtloszugriffs-Authentifizierung bestanden hat; eine vom Endgerät zurückgegebene gemeinsame Funktionsnutzungs-Anfragenachricht zu empfangen, und aus der gemeinsamen Funktionsnutzungs-Anfragenachricht Informationen einer Funktion zu beziehen, welche das Endgerät anfragt, gemeinsam zu nutzen; wobei die Informationen der Funktion, welche angefragt wird, gemeinsam genutzt zu werden, alle Arten von Funktionen umfasst, die erfolgreich aus den Informationen der von der Drahtloszugriffs-Hotspot-Vorrichtung unterstützten Funktion abgeglichen werden und geeignet sind, von dem Endgerät gemeinsam genutzt zu werden; und wenn das Endgerät eine Funktion in den Informationen der Funktion aktiviert, welche angefragt wird, gemeinsam genutzt zu werden, Anwendungsdaten, die der Funktion entsprechen, in einer drahtlosen Übertragungsweise an das Endgerät zu senden;
jedes Endgerät dazu konfiguriert ist, nachdem es die Drahtloszugriffs-Authentifizierung bestanden hat, von der Drahtloszugriffs-Hotspot-Vorrichtung die Informationen der Funktion zu empfangen, welche von der Drahtloszugriffs-Hotspot-Vorrichtung selbst unterstützt wird; die Informationen der Funktion, die vom Endgerät unterstützt wird, mit den Informationen der Funktion abzugleichen, die von der Drahtloszugriffs-Hotspot-Vorrichtung unterstützt wird, und alle Arten von Funktionen, die geeignet sind, vom Endgerät gemeinsam genutzt zu werden, herauszugleichen und die gemeinsame Funktionsnutzungs-Anfragenachricht an die Drahtloszugriffs-Hotspot-Vorrichtung zu senden, wobei alle die Arten von Funktionen, die herausgeglichen wurden, in der gemeinsamen Funktionsnutzungs-Anfragenachricht als die Informationen der Funktion übermittelt werden, welche angefragt wird, gemeinsam genutzt zu werden; und wenn die Funktion in den Informationen der Funktion, welche angefragt wird, gemeinsam genutzt zu werden, aktiviert wird, Anwendungsdaten der Funktion zu empfangen, die von der Drahtloszugriffs-Hotspot-Vorrichtung in einer drahtlosen Übertragungsweise zurückgegeben werden.

## Revendications

1. Procédé pour mettre en oeuvre un partage de fonction dans un dispositif hotspot d'accès sans fil, comprenant :
l'envoi par le dispositif hotspot d'accès sans fil d'une information d'une fonction prise en charge par le dispositif hotspot d'accès sans fil lui-même à un terminal qui a réussi une authentification d'accès sans fil (S101) ;
l'obtention par le dispositif hotspot d'accès sans fil, à partir d'un message de demande de partage de fonction renvoyé par le terminal, d'une information d'une fonction que le terminal demande à partager, dans lequel l'information de la fonction qui est demandée pour être partagée comprend tous les types de fonctions qui sont mis en correspondance avec succès à partir de l'information de la fonction prise en charge par le dispositif hotspot d'accès sans fil et sont capables d'être partagés par le terminal (S102) ; et
quand le terminal active une fonction dans l'information de la fonction qui est demandée pour être partagée, l'envoi par le dispositif hotspot d'accès sans fil de données d'application correspondant à la fonction activée au terminal dans un mode de transmission sans fil (S103).

2. Procédé selon la revendication 1, dans lequel le dispositif hotspot d'accès sans fil authentifie le terminal pour l'accès, comprenant spécifiquement :
lors de la réception d'un message de demande d'accès par le terminal, le dispositif hotspot d'accès sans fil envoie un message au terminal pour demander au terminal de fournir une identification d'identité et un algorithme d'authentification pris en charge par le terminal ;
le dispositif hotspot d'accès sans fil authentifie le terminal pour l'accès en fonction de l'identification d'identité renvoyée et de l'algorithme d'authentification pris en charge par le terminal.

3. Procédé selon la revendication 1 ou 2, comprenant en outre :
après que le dispositif hotspot d'accès sans fil obtient, à partir du message de demande de partage de fonction renvoyé par le terminal, une information de la fonction que le terminal demande à partager, la sauvegarde par le dispositif hotspot d'accès sans fil de l'identification d'identité du terminal et de l'information de la fonction dans le message de demande de partage de fonction que le terminal demande à partager en conséquence.

4. Procédé pour mettre en oeuvre un partage de fonction dans un dispositif hotspot d'accès sans fil, comprenant :
la réception par un terminal qui a réussi une authentification d'accès sans fil à partir de dispositif hotspot d'accès sans fil une information d'une fonction prise en charge par le dispositif hotspot d'accès sans fil lui-même (S201) ;
le terminal mettant en correspondance l'information de la fonction prise en charge par le terminal lui-même avec l'information de la fonction prise en charge par le dispositif hotspot d'accès sans fil pour correspondre à tous les types de fonctions capables d'être partagés par le terminal (S202), et l'envoi d'un message de demande de partage de fonction au dispositif hotspot d'accès sans fil, dans lequel tous les types de fonctions mis en correspondance sont portés dans le message de demande de partage de fonction, comme l'information de la fonction qui est demandée pour être partagée (S203) ; et
quand le terminal active la fonction dans l'information de la fonction qui est demandée pour être partagée, la réception par le terminal de données d'application correspondant à la fonction renvoyée par un dispositif hotspot d'accès sans fil d'un mode de transmission sans fil (S204).

5. Procédé selon la revendication 4, dans lequel il est demandé au terminal d'être authentifié pour un accès, comprenant spécifiquement :
l'envoi d'un message de demande d'accès au dispositif hotspot d'accès sans fil ;
l'envoi de l'identification d'identité du terminal et de l'algorithme d'authentification pris en charge par le terminal au dispositif hotspot d'accès sans fil en fonction d'un message de demande pour fournir l'identification d'identité et l'algorithme d'authentification pris en charge renvoyés par le dispositif hotspot d'accès sans fil ;
la réception d'un résultat d'authentification par le dispositif hotspot d'accès sans fil.

6. Procédé selon la revendication 4, comprenant en outre :
après que tous les types de fonctions capables d'être partagés par le terminal sont mis en correspondance, le chargement par le terminal de pilotes des fonctions mises en correspondance ; et après la réception des données d'application envoyées par le dispositif hotspot d'accès sans fil, l'achèvement par le terminal de l'obtention et de l'interprétation des données d'application en utilisant un pilote installé.

7. Procédé selon l'une quelconque des revendications 4 à 6, dans lequel le mode de transmission sans fil est un mode de fidélité sans fil, Wi-Fi.

8. Dispositif hotspot d'accès sans fil comprenant :
un composant de transmission (401) configuré pour envoyer des informations d'une fonction prise en charge par le dispositif hotspot d'accès sans fil à un terminal qui a réussi une authentification d'accès sans fil ; et, quand le terminal active une fonction dans des informations d'une fonction qui est demandée pour être partagée, envoyer des données d'application correspondant à la fonction au terminal dans un mode de transmission sans fil ;
un composant de réception (402) configuré pour recevoir un message de demande de partage de fonction renvoyé par le terminal ; et
un composant d'obtention (403) configuré pour obtenir les informations de la fonction que le terminal demande à partager à partir du message de demande de partage de fonction.

9. Dispositif hotspot d'accès sans fil selon la revendication 8, comprenant en outre :
un composant d'authentification (404) configuré pour, lors de la réception d'un message de demande d'accès envoyé par le terminal, envoyer un message au terminal demandant l'accès pour demander au terminal de fournir une identification d'identité et un algorithme d'authentification pris en charge par le terminal ; et pour authentifier le terminal pour l'accès en fonction de l'identification d'identité renvoyée et de l'algorithme d'authentification pris en charge par le terminal.

10. Dispositif hotspot d'accès sans fil selon la revendication 8 ou 9, comprenant en outre : un composant de mémoire (405) configuré pour, après l'obtention d'une information de la fonction que le terminal demande à partager à partir du message de demande de partage de fonction, sauvegarder l'identification d'identité du terminal et l'information reçue de la fonction dans le message de demande de partage de fonction que le terminal demande en conséquence.

11. Terminal comprenant :
un composant de réception (501) configuré pour, après avoir réussi l'authentification d'accès sans fil, recevoir à partir d'un dispositif hotspot d'accès sans fil une information d'une fonction prise en charge par le dispositif hotspot d'accès sans fil lui-même ; et quand le terminal active la fonction dans des informations de la fonction qui est demandée pour être partagée, recevoir des données d'application de la fonction renvoyées par le dispositif hotspot d'accès sans fil dans un mode de transmission sans fil ;
un composant de mise en correspondance (502) configuré pour mettre en correspondance de ladite information d'une fonction prise en charge par le terminal avec ladite information d'une fonction prise en charge par le dispositif hotspot d'accès sans fil et pour mettre en correspondance tous les types de fonctions capables d'être partagés par le terminal ;
un composant de transmission (503) configuré pour envoyer un message de demande de partage de fonction au dispositif hotspot d'accès sans fil, dans lequel tous les types de fonctions mis en correspondance capables d'être partagés par le terminal sont portés dans le message de demande de partage de fonction, comme l'information de la fonction qui est demandée pour être partagé.

12. Terminal selon la revendication 11, comprenant en outre :
un composant d'authentification (504) configuré pour envoyer un message de demande d'accès au dispositif hotspot d'accès sans fil ; renvoyer une identification d'identité du terminal et un algorithme d'authentification pris en charge par le terminal au dispositif hotspot d'accès sans fil en fonction d'un message de demande envoyé par le dispositif hotspot d'accès sans fil pour fournir l'identification d'identité et l'algorithme d'authentification pris en charge ; et recevoir un résultat d'authentification renvoyé par le dispositif hotspot d'accès sans fil.

13. Terminal selon la revendication 11, comprenant en outre :
un composant de chargement de pilotes (505) configuré pour charger des pilotes des fonctions mises en correspondance par le composant de mise en correspondance ; et
un composant de traitement de données d'application (506) configuré pour, après que le terminal reçoit des données d'application envoyées par le dispositif hotspot d'accès sans fil, achever l'obtention et l'interprétation des données d'application en utilisant un pilote installé par le composant de chargement de pilotes précité.

14. Système pour mettre en oeuvre un partage de fonction dans un dispositif hotspot d'accès sans fil, comprenant : le dispositif hotspot d'accès sans fil et au moins un terminal ; dans lequel :
le dispositif hotspot d'accès sans fil est configuré pour envoyer des informations d'une fonction prise en charge par le dispositif hotspot d'accès sans fil lui-même à un terminal qui a réussi une authentification d'accès sans fil ; pour recevoir un message de demande de partage de fonction renvoyé par le terminal, et pour obtenir à partir du message de demande de partage de fonction une information d'une fonction que le terminal demande à partager ; l'information de la fonction qui est demandée pour être partagée comprenant tous les types de fonctions qui sont mis en correspondance avec succès à partir de l'information de la fonction prise en charge par le dispositif hotspot d'accès sans fil et sont capables d'être partagés par le terminal ; et quand le terminal active une fonction dans l'information de la fonction qui est demandée pour être partagée, envoyer des données d'application correspondant à la fonction au terminal dans un mode de transmission sans fil ;
chaque terminal est configuré pour, après avoir réussi l'authentification d'accès sans fil, recevoir à partir du dispositif hotspot d'accès sans fil l'information de la fonction prise en charge par le dispositif hotspot d'accès sans fil lui-même ; mettre en correspondance l'information de la fonction prise en charge par le terminal avec l'information de la fonction prise en charge par le dispositif hotspot d'accès sans fil, et mettre en correspondance tous les types de fonctions capables d'être partagés par le terminal, et envoyer le message de demande de partage de fonction au dispositif hotspot d'accès sans fil, dans lequel tous les types de fonctions mis en correspondance sont des informations de la fonction qui est demandée pour être partagé, recevoir des données d'application de la fonction renvoyées par le dispositif hotspot d'accès sans fil dans un mode de transmission sans fil.
